# EUROPEAN PATENT APPLICATION

(11) **EP 4 538 731 A1**
(43) Date of publication of application: **16.04.2025**
(21) Application number: 24206091.1
(22) Date of filing: 11.10.2024
(51) Int. Cl.: G01S 5/02, G01S 5/14, H04W 4/021, H04W 4/40, H04W 4/80

(54) **METHOD AND SYSTEM FOR POSITIONING DIGITAL SMART KEY FOR VEHICLE, AND STORAGE MEDIUM**

(30) Priority: 12.10.2023 CN 202311324437
(71) Applicant: Telink Semiconductor (Shanghai) Co., Ltd., Shanghai 201203 (CN)
(72) Inventor: LIANG, Lijing, Shanghai, 201203 (CN); JIN, Haipeng, Shanghai, 201203 (CN); WANG, Sihui, Shanghai, 201203 (CN)
(74) Representative: Manitz Finsterwald Patent- und Rechtsanwaltspartnerschaft mbB

(57) **Abstract**

The present disclosure provides a method and system for positioning digital smart key for vehicle, and a storage medium. The method comprises: establishing by the main node a Bluetooth connection with a digital smart key and sending by the digital smart key periodically data packets to the main node; sending by the main node an interactive message to each sub-node according to a first data packet sent by the digital smart key at a first moment; monitoring by each sub-node a second data packet from the first digital smart key according to the interactive message and sending a signal strength of the second data packet to the main node; and determining by the main node a relative position of the first digital smart key to the vehicle according to signal strengths sent by sub-nodes. The method could increase the reliability of positioning the digital smart key for the vehicle.

## Description

### TECHNICAL FIELD

The present disclosure relates to the field of smart vehicle technology, and specifically relates to a method and system for positioning a digital smart key for a vehicle, and a storage medium.

### BACKGROUND

This section is intended to provide background or context for the embodiments of the present disclosure as set forth in claims. What is described herein is not admitted as prior art merely by virtue of its inclusion in this section.

At present, a vehicle can locate a digital smart key through Bluetooth enabled on the vehicle. When a user carrying a smart key enters the detection range of the vehicle, the vehicle can detect the presence of the digital smart key to determine its location relative to the vehicle. One of the benefits of a vehicle equipped with a smart key system is that it enables the user to operate the vehicle without the hassle of searching for and handling the key, thereby improving the ease of operating the vehicle.

However, the current method for positioning a digital smart key for a vehicle has a high requirement for timeliness, resulting in low reliability of positioning. Therefore, how to lower the requirement for timeliness when positioning a digital smart key for a vehicle is an urgent problem to be solved.

### SUMMARY

In view of the above-mentioned problem existing in the prior art, a method and system for positioning a digital smart key for a vehicle, and computer-readable storage medium are proposed, which can solve the above-mentioned problem.

The present disclosure provides the following solutions.

In the first aspect, the present disclosure provides a method of positioning a digital smart key for a vehicle, the method being applicable to a system for positioning a digital smart key for a vehicle, the system including a main node and a plurality of sub-nodes, with both the main node and the plurality of sub-nodes being located on the vehicle, and the plurality of sub-nodes being distributed at different positions on the vehicle, the method including:
establishing, by the main node, a first Bluetooth connection with a first digital smart key when the first digital smart key approaches the vehicle, and sending, by the first digital smart key, periodically data packets to the main node through the first Bluetooth connection;
sending, by the main node, a first interactive message to each of the plurality of sub-nodes according to a first data packet sent by the first digital smart key at a first moment, the first interactive message containing time information and frequency information on the first data packet;
monitoring, by each of the plurality of sub-nodes, a second data packet sent by the first digital smart key at a second moment according to the first interactive message, and sending a signal strength of the second data packet to the main node, the second moment being later than the first moment; and
determining, by the main node, a relative position of the first digital smart key to the vehicle according to a plurality of signal strengths sent by the plurality of sub-nodes.

In some possible embodiments, monitoring, by each of the plurality of sub-nodes, a second data packet sent by the first digital smart key at a second moment according to the first interactive message including:
determining, by each of the plurality of sub-nodes, time information and frequency information on the second data packet according to the time information and frequency information on the first data packet, and monitoring the second data packet sent by the first digital smart key at the second moment according to the determined time information and frequency information on the second data packet.

In some possible embodiments, the method further includes sending, by the main node, a data packet to the first digital smart key according to a data packet sent by the first digital smart key.

In some possible embodiments, the method further includes:
establishing, the main node, a second Bluetooth connection with a second digital smart key when the second digital smart key approaches the vehicle, and sending, by the second digital smart key, periodically data packets to the main node through the second Bluetooth connection;
sending, by the main node, a second interactive message to each of the plurality of sub-nodes according to a third data packet sent by the second digital smart key at a third moment, the second interactive message containing time information and frequency information on the third data packet;
monitoring, by each of the plurality of sub-nodes, a fourth data packet sent by the second digital smart key at a fourth moment according to the second interactive message, and sending a signal strength of the fourth data packet to the main node, the fourth moment being later than the third moment; and
determining, by the main node, a relative position of the second digital smart key to the vehicle according to a plurality of signal strengths sent by the plurality of sub-nodes.

In some possible embodiments, the method further includes receiving, by the main node, a data packet sent by the second digital smart key, and sending a data packet to the second digital smart key.

In some possible embodiments, the main node includes a scheduler configured to determine priorities for tasks to be executed by the main node, and the method further includes:
when a first task of sending a data packet to the first digital smart key and a second task of sending a data packet to the second digital smart key conflict on a thread to be executed by the main node, executing, by the main node, one with a higher priority among the first task and the second task.

In some possible embodiments, when the first task fails to be executed by the main node due to the conflict between the first task and the second task, the scheduler raises the priority of the first task among subsequent tasks of the main node; and when the second task fails to be executed by the main node due to the conflict between the first task and the second task, the scheduler raises the priority of the second task among subsequent tasks of the main node.

In some possible embodiments, each sub-node of the plurality of sub-nodes includes a scheduler configured to determine priorities for tasks to be executed by said each sub-node, and the method further includes:
when a third task of feeding back to the main node the signal strength of a data packet sent by the first digital smart key and a fourth task of feeding back to the main node the signal strength of a data packet sent by the second digital smart key conflict on a thread to be executed by said each sub-node, executing, by said each sub-node, one with a higher priority among the third task and the fourth task.

In some possible embodiments, when the third task fails to be executed by said each sub-node due to the conflict between the third task and the fourth task on the thread to be executed by said each sub-node, the scheduler raises the priority of the third task among subsequent tasks of said each sub-node; and when the fourth task fails to be executed by said each sub-node due to the conflict between the third task and the fourth task, the scheduler raises the priority of the fourth task among subsequent tasks of said each sub-node.

In some possible embodiments, the plurality of sub-nodes are connected to the main node through respective data buses.

In some possible embodiments, the first digital smart key includes a mobile terminal.

In some possible embodiments, the second digital smart key includes a mobile terminal.

In the second aspect, the present disclosure provides a system for positioning a digital smart key for a vehicle, the system including a main node and a plurality of sub-nodes, with both the main node and the plurality of sub-nodes being located on the vehicle, and the plurality of sub-nodes being distributed at different positions on the vehicle,
wherein the main node is configured to establish a first Bluetooth connection with the first digital smart key when the first digital smart key approaches the vehicle, and the first digital smart key is configured to periodically send data packets to the main node through the first Bluetooth connection;
the main node is further configured to send a first interactive message to each of the plurality of sub-nodes according to a first data packet sent by the first digital smart key at a first moment, the first interactive message containing time information and frequency information on the first data packet;
each of the plurality of sub-nodes is configured to monitor a second data packet sent by the first digital smart key at a second moment according to the first interactive message, and send a signal strength of the second data packet to the main node, the second moment being later than the first moment; and
the main node is further configured to determine a relative position of the first digital smart key to the vehicle according to a plurality of signal strengths sent by the plurality of sub-nodes.

In some possible embodiments, each of the plurality of sub-nodes is configured to determine time information and frequency information on the second data packet according to the time information and frequency information on the first data packet, and monitor the second data packet sent by the first digital smart key at the second moment according to the determined time information and frequency information on the second data packet.

In some possible embodiments, the main node is further configured to send a data packet to the first digital smart key according to a data packet sent by the first digital smart key.

In some possible embodiments, the main node is configured to establish a second Bluetooth connection with a second digital smart key when the second digital smart key approaches the vehicle, and the second digital smart key is configured to periodically send data packets to the main node through the second Bluetooth connection;
the main node is configured to send a second interactive message to each of the plurality of sub-nodes according to a third data packet sent by the second digital smart key at a third moment, the second interactive message containing time information and frequency information on the third data packet;
each of the plurality of sub-nodes is configured to monitor a fourth data packet sent by the second digital smart key at a fourth moment according to the second interactive message, and send a signal strength of the fourth data packet to the main node, the fourth moment being later than the third moment; and
the main node is configured to determine a relative position of the second digital smart key to the vehicle according to a plurality of signal strengths sent by the plurality of sub-nodes.

In some possible embodiments, the main node is configured to receive a data packet sent by the second digital smart key and send a data packet to the second digital smart key.

In some possible embodiments, the main node includes a scheduler configured to determine priorities for tasks to be executed by the main node; and the main node is configured to, when a first task of sending a data packet to the first digital smart key and a second task of sending a data packet to the second digital smart key conflict on a thread to be executed by the main node, execute one with a higher priority among the first task and the second task.

In some possible embodiments, the scheduler is configured to, when the first task fails to be executed by the main node due to the conflict between the first task and the second task, raise the priority of the first task among subsequent tasks of the main node; and the scheduler is configured to, when the second task fails to be executed by the main node due to the conflict between the first task and the second task, raise the priority of the second task among subsequent tasks of the main node.

In some possible embodiments, each sub-node of the plurality of sub-nodes includes a scheduler configured to determine priorities for tasks to be executed by said each sub-node, and said each sub-node is configured to, when a third task of feeding back to the main node the signal strength of a data packet sent by the first digital smart key and the fourth task of feeding back to the main node the signal strength of a data packet sent by the second digital smart key conflict on a thread to be executed by said each sub-node, execute one with a higher priority among the third task and the fourth task.

In some possible embodiments, the scheduler is configured to, when the third task fails to be executed by said each sub-node due to the conflict between the third task and the fourth task, raise the priority of the third task among subsequent tasks; and the scheduler is configured to, when the fourth task fails to be executed by said each sub-node due to the conflict between the third task and the fourth task, raise the priority of the fourth task among subsequent tasks of said each sub-node.

In a third aspect, the present disclosure provides a non-transitory computer-readable storage medium having a program stored therein, wherein the program, when executed by a multi-core processor, causes the multi-core processor to implement the aforesaid method of positioning a digital smart key for a vehicle.

It can be seen that in the method of positioning a digital smart key for a vehicle as implemented in the embodiments of the present disclosure, the first digital smart key sends the first data packet to the main node at the first moment; the main node sends the time information and frequency information on the first data packet to each of the plurality of sub-nodes according to the first data packet; the sub-nodes can infer the time information and frequency information on the data packets sent by the first digital smart key after the first moment according to the time information and frequency information on the first data packet, so as to monitor the second data packet sent by the first digital smart key at the second moment, and the data packets subsequent to the second data packet, thus the sub-nodes can send the signal strengths of the received data packet to the main node to assist the main node in locating the first digital smart key. It should be noted that, since the sub-nodes in the present disclosure can infer the time information and frequency information on the data packets sent by the first digital smart key after the first moment according to the time information and frequency information on the first data packet, the sub-nodes in the present disclosure can start monitoring the second data packet sent by the first digital smart key at any moment, thereby increasing the reliability of positioning the digital smart key for the vehicle.

Other advantages of the present disclosure will be explained in more detail with the following description and drawings.

It should be understood that the above description is only an overview of the technical solution of the present disclosure for facilitating better understanding of technical solutions of the present disclosure so as to enable implementation of the present disclosure in accordance with the content described in the specification. Detailed description of the present disclosure will be given below to make the above and other objects, features, and advantages of the present disclosure more apparent and comprehensible.

### BRIEF DESCRIPTION OF THE DRAWINGS

Through reading the detailed description of the exemplary embodiments below, a person of ordinary skill in the art would understand the advantages and benefits described herein and other advantages and benefits. The drawings are only for the purpose of illustrating exemplary embodiments and are not intended to be limitations to the present disclosure. Moreover, the same reference characters are used throughout the drawings to represent the same components. In the drawings:
FIG. 1 is a structural schematic diagram of the hardware operating environment of a device for positioning a digital smart key for a vehicle as implemented in an embodiment of the present disclosure;
FIG. 2 is a flow diagram of a method of positioning a digital smart key for a vehicle as implemented in an embodiment of the present disclosure;
FIG. 3 is a schematic timeline diagram of a first digital smart key, a main node and a sub-node as implemented in an embodiment of the present disclosure;
FIG. 4 is a schematic timeline diagram of a first digital smart key, a main node and a sub-node as implemented in another embodiment of the present disclosure;
FIG. 5 is a flow diagram of a method of positioning a digital smart key for a vehicle as implemented in another embodiment of the present disclosure;
FIG. 6 is a schematic timeline diagram of a first digital smart key, a second digital smart key, a main node and a sub-node as implemented in an embodiment of the present disclosure;
FIG. 7 is a schematic timeline diagram of a first digital smart key, a second digital smart key, a main node and a sub-node as implemented in another embodiment of the present disclosure;
FIG. 8 is a schematic timeline diagram of a first digital smart key, a second digital smart key, a main node and a sub-node as implemented in another embodiment of the present disclosure;
FIG. 9 is a schematic diagram of a system for positioning a digital smart key for a vehicle as implemented in an embodiment of the present disclosure.

In the accompanying drawings, the same or corresponding reference signs represent the same or corresponding parts.

### DETAILED DESCRIPTION

The exemplary embodiments of the present disclosure will be described in more detail below with reference to the drawings. Although the exemplary embodiments of the present disclosure are shown in the drawings, it should be understood that the present disclosure can be implemented in various forms and should not be limited by the embodiments described herein. Rather, these embodiments are provided to facilitate more thorough understanding of the present disclosure, so that the scope of the disclosure could be fully conveyed to a person of ordinary skill in the art.

In description of embodiments of the present disclosure, it should be understood that terms such as "include" or "have" are intended to indicate the existence of characteristics, digits, steps, actions, components, parts disclosed by the specification or any combination thereof, without excluding the existence of one or more other characteristics, digits, steps, actions, components, parts or any combination thereof.

Unless otherwise specified,"/" refers to "or"; for example, A/B may indicate A or B. In this specification, the term "and/or" merely describes the association relationship between the associated objects and indicates that there may be three relationships. For example, A and/or B may indicate three cases where only A exists, both A and B exist, and only B exists.

In addition, the terms such as "first" and "second" are merely for a descriptive purpose, and cannot be understood as indicating or implying a relative importance, or implicitly indicating the number of the indicated technical features. Hence, the features defined by "first" and "second" can explicitly or implicitly include one or more features. In the description of embodiments of the present disclosure, "a plurality of" means two or more in number, unless otherwise specified.

It should also be noted that the embodiments and features in the embodiments of the present disclosure can be combined with each other in the absence of conflict. The present disclosure will be described in detail below with reference to the accompanying drawings and in combination with the embodiments.

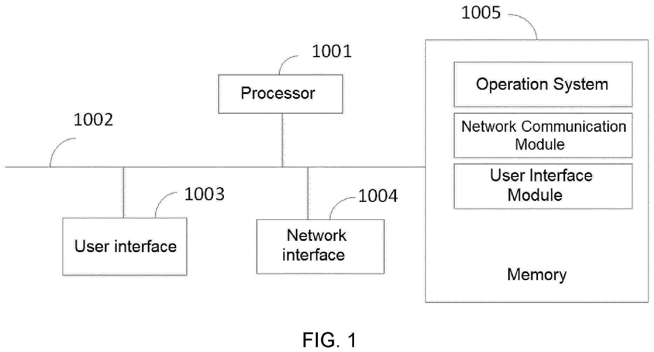

It should be noted that FIG. 1 is a structural schematic diagram of the hardware operating environment of a device for positioning a digital smart key for a vehicle as implemented in an embodiment of the present disclosure.

As shown in FIG. 1 , the device for positioning a digital smart key for a vehicle may include a processor 1001 such as a CPU, a network interface 1004, a user interface 1003, a memory 1005, and a communication bus 1002. Among them, the communication bus 1002 is configured to realize the connection and communication between these components. The user interface 1003 may include a display, an input unit such as a keyboard, and the user interface 1003 may optionally further include a standard wired interface and a wireless interface. The network interface 1004 may optionally include a standard wired interface and a wireless interface (such as a WI-FI interface). The memory 1005 may be a high-speed RAM memory or a stable memory (non-volatile memory), such as a disk memory. The memory 1005 may optionally be a storage device independent of the aforementioned processor 1001.

A person of ordinary skill in the art could understand that the structure of the device for positioning a digital smart key for a vehicle as shown in FIG. 1 does not constitute a limitation on the device for positioning a digital smart key for a vehicle, and may include more or fewer components than as shown in the figure, or combine certain components, or arrange components differently.

As shown in FIG. 1, the memory 1005 as a computer storage medium may include an operating system, a network communication module, a user interface module, and a blockchain-based information transmission program. Among them, the operating system is a program that manages and controls the hardware and software resources of the device for positioning a digital smart key for a vehicle, and supports the operation of the program for positioning a digital smart key for a vehicle and other software or programs.

In the device for positioning a digital smart key for a vehicle as shown in FIG. 1 , the user interface 1003 is mainly configured to receive requests, data, etc. sent by a first terminal, a second terminal and a supervision terminal; the network interface 1004 is mainly configured to access a backend server to perform data communication with the backend server; and the processor 1001 may be configured to call the program stored in the memory 1005 and cause the following operations to be performed:
when a first digital smart key approaches the vehicle, the main node establishes a Bluetooth connection with the first smart key, and the first digital smart key periodically sends data packets to the main node through the Bluetooth connection;
the main node sends a first interactive message to each of the plurality of sub-nodes according to a first data packet sent by the first digital smart key at a first moment, where the first interactive message includes time information and frequency information on the first data packet;
each of the plurality of sub-nodes monitors a second data packet sent by the first digital smart key at a second moment according to the first interactive message, and sends a signal strength of the received data packet to the main node, where the second moment is later than the first moment; and
the main node determines a relative position of the first digital smart key to the vehicle according to a plurality of signal strengths sent by the plurality of sub-nodes.

Therefore, the position of the digital smart key can be determined more reliably.

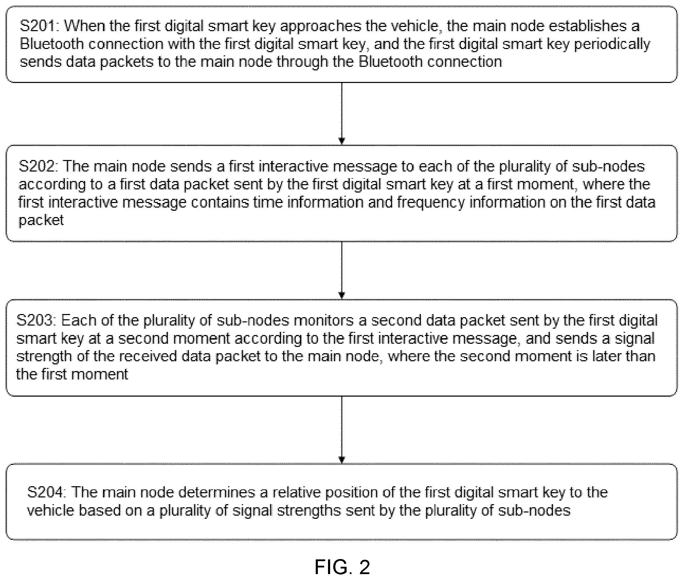

FIG. 2 is a flow chart of a method of positioning a digital smart key for a vehicle in accordance with an embodiment of the present disclosure. In this process, from the perspective of the device, the execution subject may be one or more electronic devices; from the perspective of the program, the execution subject may be a program mounted on these electronic devices.

The method of positioning a digital smart key for a vehicle as implemented in the embodiment of the present disclosure is applicable to a system for positioning a digital smart key for a vehicle. The system includes a main node and a plurality of sub-nodes. Both the main node and the plurality of sub-nodes are located on the vehicle. The plurality of sub-nodes are distributed at different positions on the vehicle. The plurality of sub-nodes are connected to the main node through respective data buses. It should be noted that the number of sub-nodes in the embodiment of the present disclosure may be 4 or other numbers, which is not limited in the embodiment of the present disclosure. Each sub-node runs its thread. Generally, the more sub-nodes there are, the better the positioning precision and accuracy.

As shown in FIG. 2 , a method of positioning a digital smart key for a vehicle as implemented in an embodiment of the present disclosure is applicable to a system for positioning a digital smart key for a vehicle. The system includes a main node and a plurality of sub-nodes. Both the main node and the plurality of sub-nodes are located on the vehicle. The plurality of sub-nodes are distributed at different locations on the vehicle. The method includes:

S201: When the first digital smart key approaches the vehicle, the main node establishes a Bluetooth connection with the first digital smart key, and the first digital smart key periodically sends data packets to the main node through the Bluetooth connection.

In the embodiment of the present disclosure, the first digital smart key can be a mobile terminal or other electronic device, which is not limited in the embodiment of the present disclosure. When the first digital smart key approaches the vehicle, the first digital smart key establishes a Bluetooth connection with a Bluetooth device on the vehicle, that is, the main node, such as a Low Energy Bluetooth (Bluetooth LE). When the main node is connected to the first digital smart key by Bluetooth, packets are periodically exchanged between the main node and the first digital smart key.

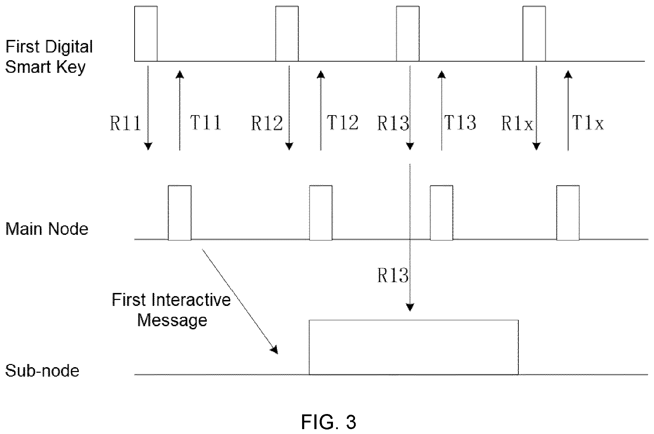

As shown in FIG. 3 illustrating a schematic timeline diagram of the first digital smart key, the main node, and the sub-node. The boxes on the timelines of the first digital smart key, the main node, and the sub-node represent the tasks that need to be executed by their threads at respective moments. In the first cycle, the first digital smart key sends a data packet R11 to the main node, the main node receives the data packet R11 sent by the first digital smart key, and sends a data packet T11 to the first digital smart key. In the second cycle, the first digital smart key sends a data packet R12 to the main node, the main node receives the data packet R12 sent by the first digital smart key, and sends a data packet T12 to the first digital smart key. In the third cycle, the first digital smart key sends a data packet R13 to the main node, the main node receives the data packet R13 sent by the first digital smart key, and sends a data packet T13 to the first digital smart key. In the xth cycle (where x is an integer), the first digital smart key sends a data packet R1x to the main node, the main node receives the data packet R1x sent by the first digital smart key, and sends a data packet T1x to the first digital smart key. Subsequent cycles are similar to the previous ones, and will not be further elaborated in the embodiment of the present disclosure.

S202: The main node sends a first interactive message to each of the plurality of sub-nodes according to a first data packet sent by the first digital smart key at a first moment, where the first interactive message contains time information and frequency information on the first data packet.

In the embodiment of the present disclosure, the plurality of sub-nodes operate independently. The first moment may be the initial moment of connection between the main node and the first digital smart key, or any moment of connection between the main node and the first digital smart key, which is not limited in the embodiment of the present disclosure. As shown in FIG. 3, the first interactive message contains the time information on the first data packet R11 sent by the first digital smart key, such as the sending time of the first data packet, the periodicity of the data packets sent by the first digital smart key, etc. The first interactive message also includes the frequency information on the first data packet, which may include the center frequency of the electrical signal via which the first data packet is sent by the first digital smart key and the mapping table for connection channels between the first digital smart key and the main node, etc., which is not limited in the embodiment of the present disclosure. The first interactive information may also include other relevant information, which is not limited in the embodiment of the present disclosure.

S203: Each of the plurality of sub-nodes monitors a second data packet sent by the first digital smart key at a second moment according to the first interactive message, and sends a signal strength of the received data packet to the main node, where the second moment is later than the first moment.

In the embodiment of the present disclosure, after receiving the first interactive information sent by the main node, the sub-node enters the monitoring (Seek) state. As shown in FIG. 3 , the sub-node can determine the time information and frequency information for subsequently receiving the second data packet R13 based on the time information and frequency information on the first data packet R11, and monitor the second data packet R13 sent by the first digital smart key at the second moment based on the time information and frequency information on the second data packet R13. The time information on the second data packet may include the sending time of the second data packet, etc. In actual applications, the sending time of the second data packet R13 inferred based on the interaction information may have an error with the actual sending time of the second data packet R13, i.e., the second moment. Therefore, the sub-node in the present disclosure can monitor the second data packet R13 sent by the digital smart key within an extended window of time near the inferred sending time of the second data packet R13.

In the implemented application, the second data packet R13 sent by the digital smart key may fail to be detected within the first extended window of time. The sub-node can calculate the time information and frequency information on the subsequent data packet R1x based on the time information and frequency information on the first data packet R11, and monitor the subsequent data packet sent by the digital smart key within an extended window of time near the sending time of the subsequent data packet R1x. The sub-node can also dynamically adjust the length of the time window to match the sending time offset of the second data packet R13 sent by the first digital smart key in the actual application, so as to achieve the effect of stable monitoring of the RSSI of the data packet sent by the first digital smart key.

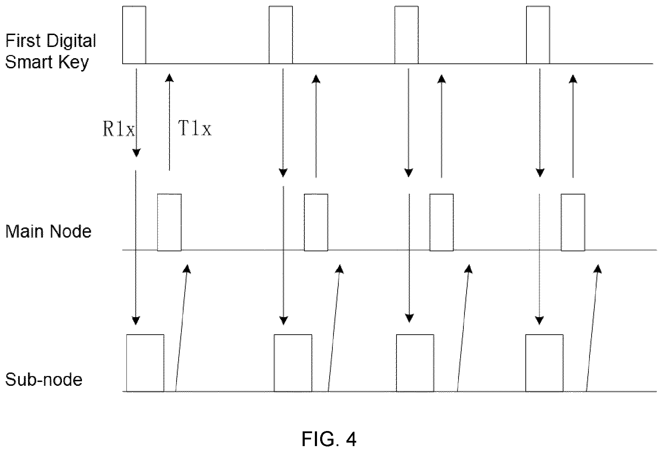

As shown in FIG. 4, after the sub-node monitors the second data packet sent by the first digital smart key, the sub-node enters the synchronization (Sync) state and can monitor the data packet R1x subsequently sent by the first digital smart key, where x is an integer. The sub-node can feed back to the main node the signal strength (such as the RSSI (Received Signal Strength Indicator) data of the data packet) of the data packet R1x sent by the first digital smart key based on the received data packet R1x.

S204: The main node determines a relative position of the first digital smart key to the vehicle based on a plurality of signal strengths sent by the plurality of sub-nodes.

The signal strength in the embodiment of the present disclosure can indicate the distance between the sub-node and the first digital smart key. The main node can determine the distance between the plurality of sub-nodes and the first digital smart key based on the plurality of signal strengths sent by the plurality of sub-nodes, and can determine the relative position of the first digital smart key to the vehicle with reference to the positions of the plurality of sub-nodes on the vehicle.

It can be seen that in the method of positioning a digital smart key for a vehicle as implemented in the embodiments of the present disclosure, the first digital smart key sends the first data packet to the main node at the first moment; the main node sends the time information and frequency information on the first data packet to each of the plurality of sub-nodes according to the first data packet; the sub-nodes can infer the time information and frequency information on the data packets sent by the first digital smart key after the first moment according to the time information and frequency information on the first data packet, so as to monitor the second data packet sent by the first digital smart key at the second moment, and the data packets subsequent to the second data packet, thus the sub-nodes can send the signal strengths of the received data packet to the main node to assist the main node in locating the first digital smart key. It should be noted that, since the sub-nodes in the present disclosure can infer the time information and frequency information on the data packets sent by the first digital smart key after the first moment according to the time information and frequency information on the first data packet, the sub-nodes in the present disclosure can start monitoring the second data packet sent by the first digital smart key at any moment, thereby increasing the reliability of positioning the digital smart key for the vehicle.

The method of positioning a digital smart key for a vehicle as provided in the present disclosure can not only locate one digital smart key, but also locate multiple digital smart keys at the same time. The following introduces the technical solution of the present disclosure by taking an example in which a second digital smart key is introduced in addition to the first digital smart key.

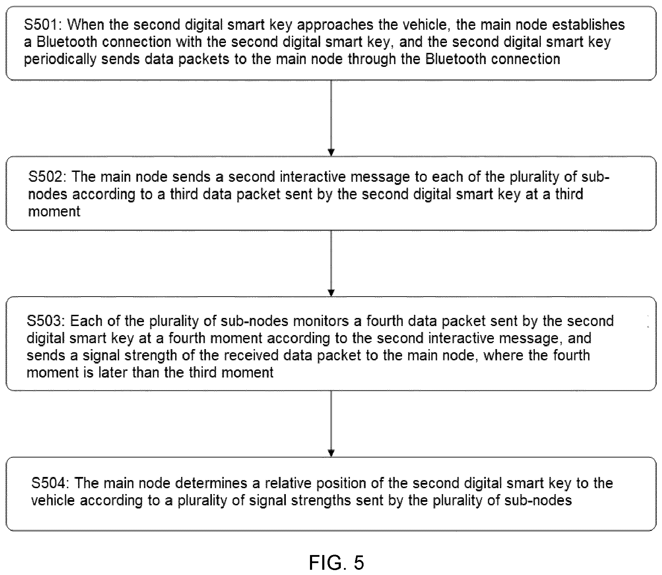

As shown in FIG. 5 , the method of positioning a digital smart key for a vehicle as implemented in the embodiment of the present disclosure may further include:
S501: When the second digital smart key approaches the vehicle, the main node establishes a Bluetooth connection with the second digital smart key, and the second digital smart key periodically sends data packets to the main node through the Bluetooth connection.

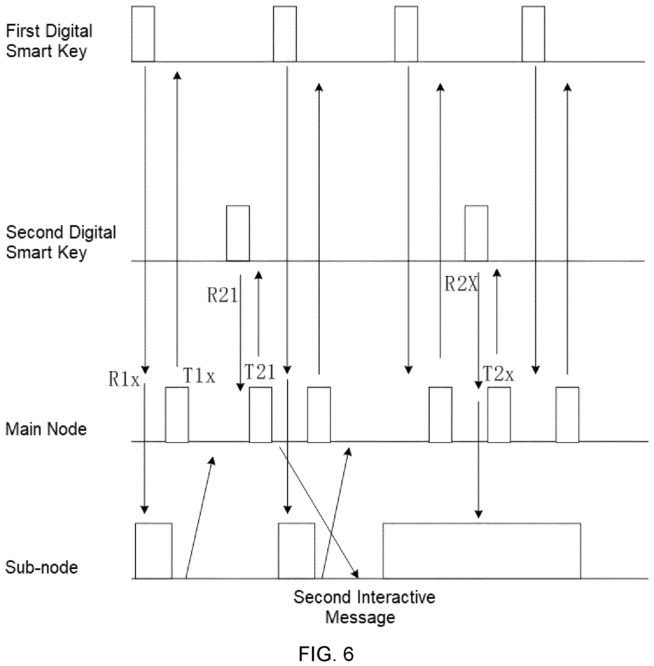

In the embodiment of the present disclosure, the second digital smart key may also be a mobile terminal. As shown in FIG. 6 , after the main node receives a data packet R2x sent by the second digital smart key, the main node may also send a data packet T2x to the second digital smart key according to the data packet R2x sent by the second digital smart key. Step S501 in the embodiment of the present disclosure is similar to the above-mentioned step S201, and will not be further elaborated in the embodiment of the present disclosure.

S502: The main node sends a second interactive message to each of the plurality of sub-nodes according to a third data packet sent by the second digital smart key at a third moment.

As shown in FIG. 6 , the main node sends the second interactive message to each of the plurality of sub-nodes according to the third data packet R21 sent by the second digital smart key at the third moment. The main node may also send a data packet T21 to the second digital smart key according to the data packet R21 sent by the second digital smart key. Step S502 in the embodiment of the present disclosure is similar to the above step S202, and will not be further elaborated in the embodiment of the present disclosure.

S503: Each of the plurality of sub-nodes monitors a fourth data packet sent by the second digital smart key at a fourth moment according to the second interactive message, and sends a signal strength of the received data packet to the main node, where the fourth moment is later than the third moment.

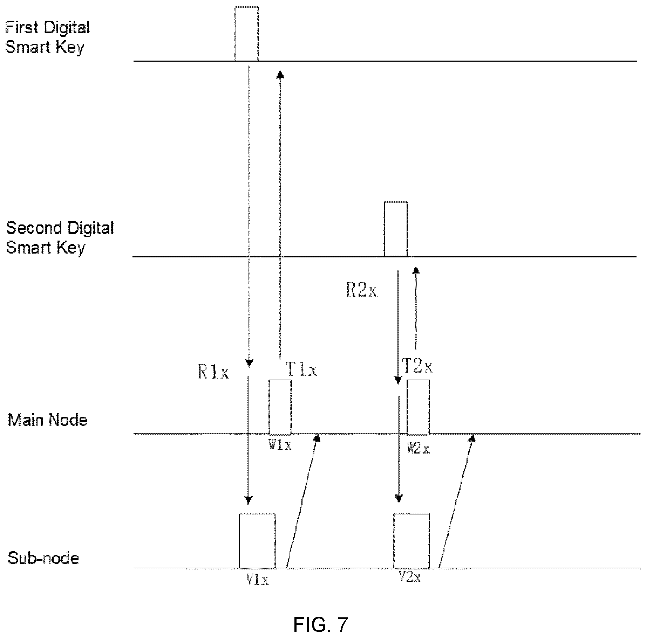

It should be noted that the second interactive message includes the time information and frequency information on the second data packet T21. The sub-node monitors the fourth data packet sent by the second digital smart key at the fourth moment according to the second interactive message, and feeds back to the main node the signal strength of the received data packet sent by the second digital smart key. As shown in FIG. 7, after the sub-node completes synchronization (Sync) with the second digital smart key, the sub-node will feed back the signal strength of the data packet (sent by the second digital smart key) to the main node according to the data packet sent by the second digital smart key. The specific implementation of step S503 in the embodiment of the present disclosure is similar to the above step S203, and will not be further elaborated in the embodiment of the present disclosure.

In actual applications, as shown in FIG. 7 , the thread of the main node may include a first task W1x that is to send a data packet to the first digital smart key and a second task W2x that is to send a data packet to the second digital smart key. The thread of the sub-node may include a third task V1x that is to feed back to the main node the signal strength of the data packet sent by the first digital smart key and a fourth task V2x that is to feed back to the main node the signal strength of the data packet sent by the second digital smart key.

In some possible implementations, W1x and W2x may conflict in a certain cycle or several cycles. In order to address the conflict between multiple different tasks, the main node includes a scheduler configured to determine priorities for tasks to be executed by the main node. The method in the embodiment of the present disclosure also includes: when the first task W1x that is to send a data packet to the first digital smart key and the second task W2x that is to send a data packet to the second digital smart key conflict on a thread to be executed by the main node, the main node executes one with a higher priority among the first task W1x and the second task W2x.

In the embodiment of the present disclosure, when the first task W1x fails to be executed by the main node due to the conflict between the first task W1x and the second task W2x, the scheduler raises the priority of the first task W1x that is to send a data packet to the first digital smart key among subsequent tasks. Therefore, when the subsequent first task W1x and second task W2x conflict, the priority of the first task W1 x corresponding to the first digital smart key will be higher than the second task W2x corresponding to the second digital smart key, and the main node usually executes the first task W1x. When the second task W2x fails to be executed by the main node due to the conflict between the first task W1x and the second task W2x, the scheduler raises the priority of the second task W2x that is to send a data packet to the second digital smart key among subsequent tasks of the main node. Therefore, when the subsequent first task W1x and second task W2x conflict, the priority of the first task W1x corresponding to the first digital smart key will be lower than the second task W2x corresponding to the second digital smart key, and the main node usually executes the second task W2x. In this way, the technical solution of the present disclosure can distribute tasks of the main node through the main node scheduler to improve the stability of connections to multiple digital keys at the same time.

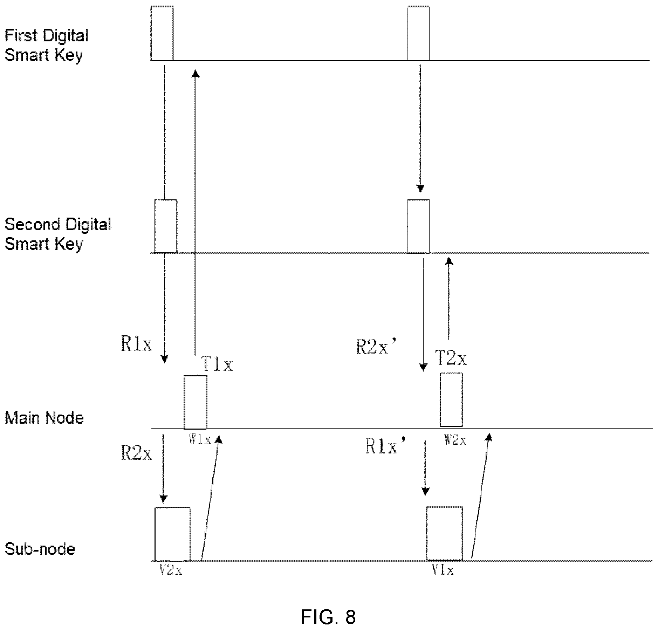

Accordingly, in some possible implementations, V1x and V2x may conflict in a certain cycle or several cycles. As shown in FIG. 8 , each sub-node of the plurality of sub-nodes includes a scheduler configured to determine priorities of tasks to be executed by said each sub-node. When the data packet R1x sent by the first digital smart key conflicts with the data packet R2x sent by the second digital smart key, that is, when the third task V1x that is to feed back to the main node the signal strength of the data packet sent by the first digital smart key and the fourth task V2x that is to feed back to the main node the signal strength of the data packet sent by the second digital smart key conflict, the sub-node executes one with a higher priority among the third task V1x and the fourth task V2x.

In an embodiment of the present disclosure, as shown in FIG. 8 , when the third task V1x fails to be executed by said each sub-node due to the conflict between the third task V1x and the fourth task V2x on the thread to be executed by said each sub-node, the scheduler raises the priority of the third task V1x that is to feed back to the main node the signal strength of the data packet sent by the first digital smart key among subsequent tasks. Therefore, when the subsequent data packet R1x' sent by the first digital smart key conflicts with the data packet R2x' sent by the second digital smart key, that is, when the third task V1x conflicts with the fourth task V2x, the priority of the third task V1x corresponding to the first digital smart key will be higher than the fourth task V2x corresponding to the second digital smart key, and the sub-node will usually execute the third task V1x. When the fourth task V2x fails to be executed by said each sub-node due to the conflict between the third task V1x and the fourth task V2x, the scheduler raises the priority of the fourth task V2x that is to feed back to the main node the strength of the data packet sent by the second digital smart key among subsequent tasks of said each sub-node. Therefore, when the subsequent third task V1x conflicts with the fourth task V2x, the priority of the third task V1x corresponding to the first digital smart key will be lower than the fourth task V2x corresponding to the second digital smart key, and the sub-node will usually execute the fourth task V2x.

S504: The main node determines a relative position of the second digital smart key to the vehicle according to a plurality of signal strengths sent by the plurality of sub-nodes.

Step S504 in the embodiment of the present disclosure is similar to the above-mentioned step S204, and will not be further elaborated in the embodiment of the present disclosure. The method of positioning a digital smart key for a vehicle in the embodiment of the present disclosure can simultaneously locate the positions of two or more digital smart key for a vehicle, where the method of positioning more than two digital smart keys is similar to the above-mentioned scheme for positioning the first digital smart key and the second digital smart key, and will not be further elaborated in the embodiment of the present disclosure.

In summary, based on the method of positioning a digital smart key for a vehicle as implemented in the embodiment of the present disclosure, on one hand, since the sub-node in the present disclosure can infer the time information and frequency information on the data packet sent by the first digital smart key after the first moment based on the time information and frequency information on the first data packet, the sub-node in the present disclosure can start monitoring the second data packet sent by the first digital smart key at any moment, thereby increasing the reliability of positioning a digital smart key for a vehicle; on the other hand, the main node in the present disclosure can be connected to multiple digital keys at the same time, the sub-nodes can monitor multiple digital keys at the same time, and the scheduler is utilized to dynamically allocate tasks according to the priority arbitration management mechanism, thus improving the RSSI data continuity of the data packets sent by multiple digital smart keys at the same time.

In the description of this specification, the description with reference to the terms "some possible embodiments", "some embodiments", "examples", "specific examples", or "some examples" means that the specific features, structures, materials or characteristics described in conjunction with the embodiment or example are included in at least one embodiment or example of the present disclosure, and the above terms do not necessarily represent the same embodiment or example. Moreover, the specific features, structures, materials or characteristics described can be combined in any one or more embodiments or examples in a suitable manner. In addition, the different embodiments or examples described in this specification and the features of different embodiments or examples can be referred to and combined by a person skilled in the art without contradiction.

Regarding the method flow chart of the embodiment of the present disclosure, certain operations are described as different steps performed in a certain order. Such a flow chart is illustrative rather than restrictive. Certain steps described herein can be grouped together and performed in a single operation, or certain steps can be divided into a plurality of sub-steps, and certain steps can be performed in a different order than shown herein. The various steps shown in the flow chart can be implemented in any way by any circuit structure and/or tangible mechanism (for example, by software running on a computer device, hardware (for example, a logical function implemented by a processor or chip), etc., and/or any combination thereof).

A person of ordinary skill in the art can understand that in the method described in the above specific implementation, the writing order of each step does not mean a strict execution order, and the specific execution order of each step should be determined by its function and possible internal logic.

According to the method of positioning a digital smart key for a vehicle as implemented in the above embodiments, the present disclosure also provides a system for positioning a digital smart key for a vehicle.

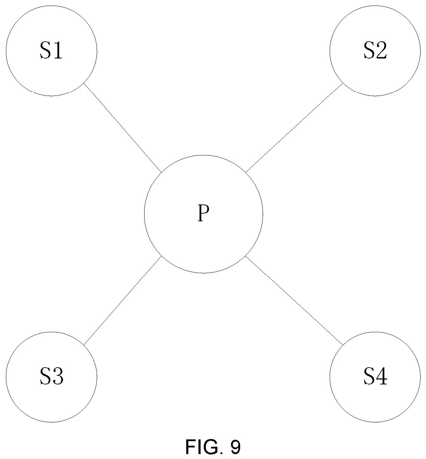

FIG. 9 illustrating a schematic diagram of a system for positioning a digital smart key for a vehicle as implemented in an embodiment of the present disclosure is referred to.

As shown in FIG. 9 , a system for positioning a digital smart key for a vehicle as implemented by an embodiment of the present disclosure includes a main node P and plurality of sub-nodes S1-S4, where both the main node P and the plurality of sub-nodes S1-S4 are located on the vehicle, and the plurality of sub-nodes S1-S4 are distributed at different positions on the vehicle.

The main node P is configured to, when the first digital smart key approaches the vehicle, establish a Bluetooth connection with the first digital smart key, and the first digital smart key is configured to periodically send data packets to the main node P through the Bluetooth connection.

The main node P is further configured to send a first interactive message to each of the plurality of sub-nodes S1-S4 according to a first data packet sent by the first digital smart key at a first moment, where the first interactive message includes the time information and frequency information on the first data packet.

Each of the plurality of sub-nodes S1-S4 is configured to monitor a second data packet sent by the first digital smart key at a second moment according to the first interactive message, and send a signal strength of the received data packet to the main node P, where the second moment is later than the first moment.

The main node P is further configured to determine a relative position of the first digital smart key to the vehicle according to a plurality of signal strengths sent by the plurality of sub-nodes.

In an embodiment of the present disclosure, the plurality of sub-nodes are connected to the main node through respective data buses. The first digital smart key includes a mobile terminal. The second digital smart key includes a mobile terminal.

In some possible embodiments, each of the plurality of sub-nodes is configured to determine the time information and frequency information on the second data packet according to the time information and frequency information on the first data packet, and monitor the second data packet sent by the digital smart key at the second moment according to the time information and frequency information on the second data packet. In some possible embodiments, the main node is further configured to send a data packet to the first digital smart key according to a data packet sent by the first digital smart key.

In some possible embodiments, the main node is configured to, when a second digital smart key approaches the vehicle, establish a Bluetooth connection with the second digital smart key, and the second digital smart key is configured to periodically send data packets to the main node through the Bluetooth connection; the main node is configured to send a second interactive message to each of the plurality of sub-nodes according to a third data packet sent by the second digital smart key at a third moment, where the second interactive message includes the time information and frequency information on the third data packet; each of the plurality of sub-nodes is configured to monitor a fourth data packet sent by the second digital smart key at a fourth moment according to the second interactive message, and send a signal strength of the received data packet to the main node, where the fourth moment is later than the third moment; the main node is configured to determine a relative position of the second digital smart key to the vehicle according to a plurality of signal strengths sent by the plurality of sub-nodes. In some possible embodiments, the main node is configured to receive a data packet sent by the second digital smart key and send a data packet to the second digital smart key.

In some possible embodiments, the main node includes a scheduler configured to determine priorities of tasks to be executed by the main node; and the main node is configured to, when a first task of sending a data packet to the first digital smart key and a second task of sending a data packet to the second digital smart key conflict on a thread to be executed by the main node, execute one with a higher priority among the first task and the second task.

In some possible embodiments, the scheduler is configured to, when the first task fails to be executed by the main node due to a conflict between the first task and the second task, raise the priority of the first task among subsequent tasks of the main node; the scheduler is configured to, when the main node does not execute the second task due to a conflict between the first task and the second task, raise the priority of the second task among subsequent tasks of the main node.

In some possible embodiments, each sub-node of the plurality of sub-nodes includes a scheduler configured to determine priorities of tasks to be executed by said each sub-node, and the sub-node is configured to, when a third task of feeding back to the main node the signal strength of a data packet sent by the first digital smart key and the fourth task of feeding back to the main node the signal strength of a data packet sent by the second digital smart key on the thread to be executed by said each sub-node conflict, executes one with a higher priority among the third task and the fourth task.

In some possible embodiments, the scheduler is configured to, when the third task fails to be executed by said each sub-node due to a conflict between the third task and the fourth task, raise the priority of the third task among subsequent tasks; the scheduler is configured to, when the fourth task fails to be executed by said each sub-node due to a conflict between the third task and the fourth task, raise the priority of the fourth task among subsequent tasks of said each sub-node.

It should be noted that the system in the embodiment of the present disclosure can implement the various processes of the aforementioned embodiments of the method and achieve the same effect and function, which will not be repeated here.

According to some embodiments of the present disclosure, a non-transitory computer storage medium for a method of positioning a digital smart key for a vehicle is provided to have a computer executable instruction stored therein, where the computer executable instruction is configured to, when executed by a processor, cause the method of positioning a digital smart key for a vehicle described in the above embodiments to be implemented.

Computer-readable media includes permanent and non-permanent, removable and non-removable media, and information storage can be implemented by any method or technology. Information can be a computer-readable instruction, a data structure, a module of a program, or other data. Examples of computer-readable storage media include, but are not limited to, phase change memory (PRAM), static random access memory (SRAM), dynamic random access memory (DRAM), other types of random access memory, read-only memory, electrically erasable programmable read-only memory (EEPROM), flash memory or other memory technology, CD-ROM, digital versatile disc (DVD) or other optical storage, magnetic cassette, tape disk storage or other magnetic storage device or any other non-transmission medium, which can be configured to store information that can be accessed by a computing device. In addition, although the operations of the method of the present disclosure are described in a specific order in the drawings, this does not require or imply that these operations must be performed in this specific order, or that all the operations shown must be performed to achieve the desired results. In addition, some steps can be omitted, multiple steps can be combined into one step, and/or one step can be decomposed into the plurality of sub-steps.

Although the spirit and principles of the present disclosure have been described above with reference to several specific embodiments, it should be understood that the present disclosure is not limited to the disclosed specific embodiments, and the division of various aspects does not mean that the features in these aspects cannot be combined. The present disclosure is intended to cover various modifications and equivalent arrangements included in the spirit and scope of the attached claims.

## Claims

1. A method of positioning a digital smart key for a vehicle, the method being applicable to a system for positioning a digital smart key for a vehicle, the system comprising a main node and a plurality of sub-nodes, with both the main node and the plurality of sub-nodes being located on the vehicle, and the plurality of sub-nodes being distributed at different positions on the vehicle, **characterized in that** the method comprises:
establishing (S201), by the main node, a first Bluetooth connection with a first digital smart key when the first digital smart key approaches the vehicle, and sending, by the first digital smart key, periodically data packets to the main node through the first Bluetooth connection;
sending (S202), by the main node, a first interactive message to each of the plurality of sub-nodes according to a first data packet sent by the first digital smart key at a first moment, the first interactive message containing time information and frequency information on the first data packet;
monitoring (S203), by each of the plurality of sub-nodes, a second data packet sent by the first digital smart key at a second moment according to the first interactive message, and sending a signal strength of the second data packet to the main node, the second moment being later than the first moment; and
determining (S204), by the main node, a relative position of the first digital smart key to the vehicle according to a plurality of signal strengths sent by the plurality of sub-nodes.

2. The method according to claim 1, wherein monitoring (S203), by each of the plurality of sub-nodes, a second data packet sent by the first digital smart key at a second moment according to the first interactive message comprising:
determining, by each of the plurality of sub-nodes, time information and frequency information on the second data packet according to the time information and frequency information on the first data packet, and monitoring the second data packet sent by the first digital smart key at the second moment according to the determined time information and frequency information on the second data packet.

3. The method according to claim 1, further comprising:
sending, by the main node, a data packet to the first digital smart key according to a data packet sent by the first digital smart key.

4. The method according to claim 1, further comprising:
establishing (S501), the main node, a second Bluetooth connection with a second digital smart key when the second digital smart key approaches the vehicle, and sending, by the second digital smart key, periodically data packets to the main node through the second Bluetooth connection;
sending (S502), by the main node, a second interactive message to each of the plurality of sub-nodes according to a third data packet sent by the second digital smart key at a third moment, the second interactive message containing time information and frequency information on the third data packet;
monitoring (S503), by each of the plurality of sub-nodes, a fourth data packet sent by the second digital smart key at a fourth moment according to the second interactive message, and sending a signal strength of the fourth data packet to the main node, the fourth moment being later than the third moment; and
determining (S504), by the main node, a relative position of the second digital smart key to the vehicle according to a plurality of signal strengths sent by the plurality of sub-nodes.

5. The method according to claim 4, further comprising:
receiving, by the main node, a data packet sent by the second digital smart key, and sending a data packet to the second digital smart key.

6. The method according to claim 5, wherein the main node comprises a scheduler configured to determine priorities for tasks to be executed by the main node, and the method further comprises:
when a first task of sending a data packet to the first digital smart key and a second task of sending a data packet to the second digital smart key conflict on a thread to be executed by the main node, executing, by the main node, one with a higher priority among the first task and the second task.

7. The method according to claim 6, wherein when the first task fails to be executed by the main node due to the conflict between the first task and the second task, the scheduler raises the priority of the first task among subsequent tasks of the main node; and
when the second task fails to be executed by the main node due to the conflict between the first task and the second task, the scheduler raises the priority of the second task among subsequent tasks of the main node.

8. The method according to claim 5, wherein each sub-node of the plurality of sub-nodes comprises a scheduler configured to determine priorities for tasks to be executed by said each sub-node, and the method further comprises:
when a third task of feeding back to the main node the signal strength of a data packet sent by the first digital smart key and a fourth task of feeding back to the main node the signal strength of a data packet sent by the second digital smart key conflict on a thread to be executed by said each sub-node, executing, by said each sub-node, one with a higher priority among the third task and the fourth task.

9. The method according to claim 8, wherein when the third task fails to be executed by said each sub-node due to the conflict between the third task and the fourth task on the thread to be executed by said each sub-node, the scheduler raises the priority of the third task among subsequent tasks of said each sub-node; and
when the fourth task fails to be executed by said each sub-node due to the conflict between the third task and the fourth task, the scheduler raises the priority of the fourth task among subsequent tasks of said each sub-node.

10. A system for positioning a digital smart key for a vehicle, the system comprising a main node (P) and a plurality of sub-nodes (S1, S2, S3, S4), with both the main node (P) and the plurality of sub-nodes (S1, S2, S3, S4) being located on the vehicle, and the plurality of sub-nodes (S1, S2, S3, S4) being distributed at different positions on the vehicle,
**characterized in that** the main node (P) is configured to establish a first Bluetooth connection with the first digital smart key when the first digital smart key approaches the vehicle, and the first digital smart key is configured to periodically send data packets to the main node (P) through the first Bluetooth connection;
the main node (P) is further configured to send a first interactive message to each of the plurality of sub-nodes (S1, S2, S3, S4) according to a first data packet sent by the first digital smart key at a first moment, the first interactive message containing time information and frequency information on the first data packet;
each of the plurality of sub-nodes (S1, S2, S3, S4) is configured to monitor a second data packet sent by the first digital smart key at a second moment according to the first interactive message, and send a signal strength of the second data packet to the main node (P), the second moment being later than the first moment; and
the main node (P) is further configured to determine a relative position of the first digital smart key to the vehicle according to a plurality of signal strengths sent by the plurality of sub-nodes (S1, S2, S3, S4).

11. The system according to claim 10, wherein each of the plurality of sub-nodes (S1, S2, S3, S4) is configured to determine time information and frequency information on the second data packet according to the time information and frequency information on the first data packet, and monitor the second data packet sent by the first digital smart key at the second moment according to the determined time information and frequency information on the second data packet.

12. The system according to claim 10, wherein the main node (P) is further configured to send a data packet to the first digital smart key according to a data packet sent by the first digital smart key.

13. The system according to claim 10, wherein the main node (P) is configured to establish a second Bluetooth connection with a second digital smart key when the second digital smart key approaches the vehicle, and the second digital smart key is configured to periodically send data packets to the main node (P) through the second Bluetooth connection;
the main node (P) is configured to send a second interactive message to each of the plurality of sub-nodes (S1, S2, S3, S4) according to a third data packet sent by the second digital smart key at a third moment, the second interactive message containing time information and frequency information on the third data packet;
each of the plurality of sub-nodes (S1, S2, S3, S4) is configured to monitor a fourth data packet sent by the second digital smart key at a fourth moment according to the second interactive message, and send a signal strength of the fourth data packet to the main node (P), the fourth moment being later than the third moment; and
the main node (P) is configured to determine a relative position of the second digital smart key to the vehicle according to a plurality of signal strengths sent by the plurality of sub-nodes (S1, S2, S3, S4).

14. The system according to claim 13, wherein the main node (P) is configured to receive a data packet sent by the second digital smart key and send a data packet to the second digital smart key.

15. A non-transitory computer-readable storage medium having a program stored therein, wherein the program, when executed by a multi-core processor, causes the multi-core processor to implement the method according to any one of claims 1-9.
